# EUROPÄISCHE PATENTSCHRIFT

(11) **EP 0 665 780 B1**
(45) Veröffentlichungstag und Bekanntmachung des Hinweises auf die Patenterteilung: **02.04.1997**
(21) Anmeldenummer: 93921826.9
(22) Anmeldetag: 16.10.1993
(51) Int. Cl.: B29C 33/04

(54) **TEMPERIERBARES WERKZEUG BZW. TEMPERIERBARE FORM ZUR HERSTELLUNG VON KUNSTSTOFFORMTEILEN UND VERFAHREN ZUR HERSTELLUNG SOLCHER WERKZEUGE BZW. FORMEN**
TEMPERATURE-CONTROLLABLE TOOL OR MOULD FOR PRODUCING PLASTIC MOULDINGS AND PROCESS FOR MAKING SUCH TOOLS OR MOULDS
OUTIL OU MOULE A REGULATION THERMIQUE POUR LA FABRICATION DE PIECES MOULEES EN MATIERE PLASTIQUE ET PROCEDE POUR LA FABRICATION DE CES OUTILS OU MOULES

(30) Priorität: 16.10.1992 DE 4234961
(43) Veröffentlichungstag der Anmeldung: 09.08.1995
(73) Patentinhaber: INNOVA ZUG AG, CH-6304 Zug (CH)
(72) Erfinder: Schmetz, Klaus, D-58706 Menden (DE)
(74) Vertreter: Cohausz & Florack
(86) Internationale Anmeldenummer: DE9300987
(87) Internationale Veröffentlichungsnummer: WO9408770

(56) Entgegenhaltungen:
- EP-A- 0 143 876
- FR-A- 2 493 215
- US-A- 1 574 175
- US-A- 2 458 427
- US-A- 3 181 200
- US-A- 3 941 547

## Beschreibung

Die Erfindung betrifft ein Verfahren zur Herstellung eines mit wenigstens je einer Einlaß- und Auslaßöffnung und inneren Kanälen versehenen Werkzeuges bzw. einer entsprechenden Form sowie auf diese Weise hergestellte Werkzeuge bzw. Formen.

Beim Spritzgießen von Kunststofformteilen werden temperierbare Werkzeuge oder Formen aus einem oder mehreren Elementen mit jeweils wenigstens einer Ein- und Auslaßöffnung, welche durch wenigstens einen Kanal miteinander verbunden sind, verwendet. Solche Werkzeuge bzw. Formen dienen als "Negativ" der zu produzierenden Kunststoffendprodukte. Dabei wird ein flüssiger Kunststoffstrom, der aus einer Plastifiziereinheit wie beispielsweise einem Extruder über einen Heißkanalkörper (auch als Heißkanalplatte bezeichnet) aus wenigstens einem Spritzgußdüsenkörper gespeist und über Kanäle, in die entsprechenden Formnester (Kavitäten) gepreßt. Die Formnester weisen - je nach der gewünschten Form des Endprodukts - eine unterschiedliche Geometrie bezüglich ihrer Gesamtheit aber auch bezüglich der einzelnen Wandstärken des Kunststofformteils auf.

Der flüssige Kunststoff wird dabei über das in den Formen befindliche Temperiermedium-Kanalsystem entweder mittels Wärmezufuhr ausgehärtet, also chemisch vernetzt, oder mittels Wärmeentzug durch Einfrieren der Kunststoffketten zur Erstarrung gebracht. Nach der Erstarrung wird das Kunststofformteil aus dem Werkzeug oder der Form entfernt.

Die Qualität solcher Kunststofformteile hinsichtlich Verzug, Eigenspannungsanteil, Oberflächenqualität sowie der Zeitpunkt, nachdem die Formteile ausgeformt werden können, hängen entscheiden von der Beherrschbarkeit des Beheizungs- oder Kühlprozesses ab. Der räumliche Verlauf des Temperiermedium-Kanalsystems sowie die Temperatur des Temperiermediums im jeweiligen Werkzeug- bzw. Formbereich sind dabei von erheblicher Bedeutung, so sollen die Kanäle und Kavitäten gleichmäßig erwärmt oder gekühlt werden, um in kürzestmöglicher Zeit ein maßhaltiges, eigenspannungsfreies Kunststofformteil aus dem Werkzeug auszubringen.

Um dies zu erreichen, ist es erforderlich, über die gesamte Werkzeug- bzw. Formteilfläche die Wärme gleichmäßig ins Formteil einzubringen bzw. sie diesem gleichmäßig zu entziehen. Bei thermoplastischen Kunststofformteilen mit einfachen bis stark unterschiedlichen Wandstärken bedeutet dies, daß beispielsweise in Bereichen mit Materialanhäufungen intensiver gekühlt werden muß als in Bereichen mit weniger Materialaufkommen.

Werkzeuge und Formen bestehen in der Regel aus ein- oder mehrteiligen massiven Stahlteilen, in die von außen her eine Mehrzahl von Bohrungen zielgerichtet eingebracht werden, die sich der Formnestwand bis auf einen bestimmten Abstand nähern. Solche gebohrten Kanäle, durch die ein Medium zirkulieren kann, führen jedoch häufig zu einer sehr ineffezienten Kühlung, da die Herstellung der Kanäle nur durch gerade Bohrungen realisiert werden kann, so daß nur eine begrenzte Einflußnahme auf die tatsächliche Kontur und Distanz zu der Formnestwand des herzustellenden Formteiles erfolgen kann.

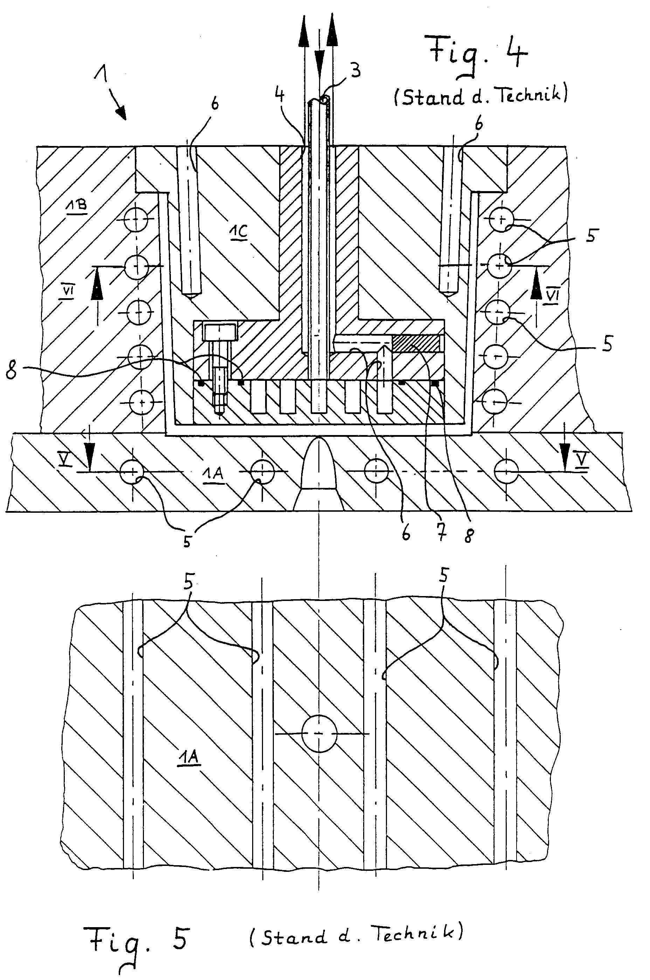

Die Figuren 4 bis 6 zeigen ein bekanntes Werkzeug zur Herstellung eines Kunststofformteiles. Das Werkzeug 1 ist in Figur 4 im Vertikalschnitt dargestellt und besteht im wesentlichen aus einer Bodenform 1A, einer Ringform 1B und einer inneren Kernform 1C. Der von den drei Formen 1A, 1B und 1C umschlossene Hohlraum bildet ein Formnest 2, welches in seiner Form dem herzustellenden Kunststofformteil entspricht.

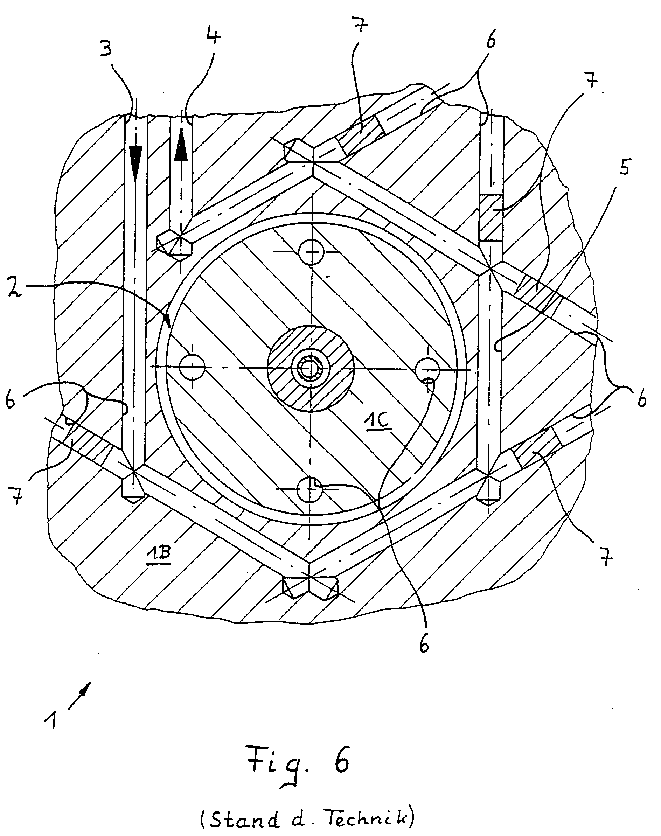

Figur 4 ist ferner eine Einlaßöffnung 3 und eine konzentrisch dazu angeordnete Auslaßöffnung 4 zu entnehmen. Sie sind mit einem Kanal 5 verbunden, der zum Durchfließen des Werkzeugs 1 mit Temperiermedium dient. Figur 5 zeigt nun einen Horizontalschnitt durch die Bodenform 1A entlang der Linie V-V in Figur 4. Es ist schnell ersichtlich, daß der Verlauf der Kanäle 5 in der Bodenform 1A nicht der runden Form des Formnestes 2 angepaßt ist. Figur 6 zeigt schließlich einen weiteren Horizontalschnitt entlang der Linie VI-VI in Figur 4. Auch hier ist wiederum eine Einlaßöffnung 3 und eine Auslaßöffnung 4 dargestellt, die durch einen Kanal 5 verbunden sind. Der Kanal 5 besteht dabei aus einer Mehrzahl von Sackbohrungen 6, welche durch entsprechende Stopfen 7 verschlossen sind.

Schließlich ist Figur 4 noch zu entnehmen, daß auch die Kernform 1C mehrteilig ausgeführt sein kann. Hierbei werden die einzelnen Teile durch nicht näher bezeichnete Verschraubungen miteinander befestigt. Zur Abdichtung der einzelnen Kanäle dienen O-Ring-Dichtungen 8.

Obwohl im dargestellten Beispiel das Kunststofformteil eine gleichbleibende Wandstärke aufweist, wird doch schnell ersichtlich, daß mit den bekannten Temperierkanälen nicht möglich ist, eine gleichmäßige Wärmezufuhr bzw. -abfuhr zu erreichen. Es ist klar, daß ein solch assymmetrisches Temperaturprofil mit erheblichen Nachteilen bezüglich der Qualität des Formteiles und der Zeit seiner Herstellung verbunden ist.

Je nach Ausgestaltung des herzustellenden Formteiles lassen sich derzeit überhaupt keine Bohrungen positionieren, beispielsweise in engen Bereichen von Kernen oder in Bereichen, in denen funktionsbedingte Elemente wie Auswerfer oder ähnliches angebracht werden müssen. Dies führt ebenfalls zu den bereits erwähnten Unregelmäßigkeiten.

Es ist weiter bekannt, daß neben den beschriebenen gebohrten Kanälen mit unterschiedlicher Lage der Ein- und Auslaßöffnungen auch Sacklochbohrungen mit zusätzlichen Kühlrohren in einer Öffnung verwendet werden. Aber auch hierbei bestehen die oben aufgeführten Probleme, so entstehen durch die hohen Einspritzdrücke und - geschwindigkeiten beim Einsatz von Kühlwendeln oft instabile Formenkerne, welche sich auf die Maßhaltigkeit der Werkstücke auswirken. Miteinander verschraubte Formteile sind häufig durch O-Ring-Dichtungen im Bereich der Temperiermedium-Kanäle vor Leckage geschützt. Die Verwendung solcher O-Ring-Dichtungen hat sich immer wieder als problematisch erwiesen, insbesondere wegen der auftretenden Spaltkorrosion.

Darüber hinaus ist aus der US-A-3 181 200 eine Temperiervorrichtung für die Herstellung von Schallplatten bekannt. Diese Temperiervorrichtung weist ebenfalls ein Kanalsystem auf, welches zum schnellen Abkühlen des Werkzeuginneren nach Einspritzen des Kunststoffes dient. Bei der bekannten Temperiervorrichtung ist ein Temperierkanal in nur einer einzigen Ebene beschrieben. Um die erforderliche Dichtigkeit zu erreichen, werden die mit den Kanälen versehenen Formhälften mit jeweils einer Deckplatte verschraubt. Diese Lösung mag für die Herstellung von Schallplatten ausreichend sein, da hier regelmäßig geringere Drücke als bei den Spritzgießformen gemäß der Erfindung verwendet werden, dementsprechend treten auch keine Abdichtungsprobleme auf. Darüber hinaus ist die bekannte Temperiervorrichtung nicht dazu geeignet, mit extrem kurzen Zykluszeiten zu arbeiten. Bei der bekannten Temperiervorrichtung hat jedes Formteil nur eine einzige Ein- und Auslaßöffnung, so daß selbst bei sehr schnellem Temperiermedium-Durchfluß eine absolut gleichmäßige Temperaturänderung der Form überhaupt nicht möglich ist. Hier wird also das Material des Formwerkzeuges gewissermaßen als "Wärmeausgleichsschicht" benötigt, um absolut eigenspannungsfreie Kunststofformteile herstellen zu können, was bei der Herstellung von Schallplatten unerläßlich ist.

Schließlich ist aus der US-A-2,458,427 ein Verfahren zur Herstellung von Schallplatten bekannt. Bei diesem Verfahren wird eine Platte mit spiralförmigen Kanälen zwischen zwei Stahlplatten gebracht und miteinander hartverlötet. Dieses Verfahren ist einerseits sehr aufwendig und andererseits erlaubt das bekannte Verfahren keinen beliebigen Kanalverlauf, da die die Kanäle enthaltende Platte nur Kanäle solcher Geometrie enthalten kann, die einen Zusammenhalt dieser Platte noch zuverlässig gewährleistet, wie dies beispielsweise bei der im Ausführungsbeispiel gezeigten Spiralform der Fall ist.

Der Erfindung liegt daher die Aufgabe zugrunde, das eingangs erwähnte und zuvor näher beschriebene Verfahren so auszugestalten und weiterzubilden, daß die vorerwähnten Nachteile vermieden werden und insbesondere eine Verkürzung der Schußzeit (Zykluszeit) und Verbesserung der Wartungsfreudigkeit erreicht werden, so daß die Qualität der gespritzten Formteile erhöht werden kann. Darüber hinaus ist eine Verbesserung der bekannten Temperatursteuerung in ihrer Gesamtheit erwünscht.

Diese Aufgabe wird bei dem Verfahren nach dem Oberbegriff von Patentanspruch 1 durch die Kombination der folgenden Verfahrensschritte erreicht:
- Auftrennen des Werkzeugs bzw. der Form in den Ebenen der herzustellenden Kanäle,
- Herstellen der Kanäle entsprechend dem gewünschten Verlauf in Abhängigkeit des geplanten Volumenstroms des Temperiermediums und Temperaturprofils im Kunststofformteil in den Trennflächen des aufgetrennten Werkzeugs bzw. der aufgetrennten Form durch Fräsen, Erodieren od. dgl. und
- Verbinden der aufgetrennten Teile des Werkzeugs bzw. der Form durch Hart- oder Hochtemperaturlöten.

Das mit diesem Verfahren hergestellte Werkzeug bzw. die so hergestellte Form ist dadurch gekennzeichnet, daß die Kanäle in mehreren Ebenen verlaufen, daß der Verlauf der Kanäle der äußeren Form des Formnestes angepaßt ist und daß die Geometrie der Kanäle auf das Temperaturprofil im Kunststofformteil abgestimmt ist.

Das erfindungsgemäße Verbinden der aufgeschnittenen Formteile durch Hart- oder Hochtemperaturlöten erfolgt in weiter Ausgestaltung der Erfindung in einem Vakuumofen.

Die nach dem erfindungsgemäßen Verfahren hergestellten Werkzeuge bzw. Formen unterliegen keinerlei Beschränkungen bezüglich der Wahl des Verlaufes der Temperiermedium-Kanäle sowie der geometrischen Ausgestaltung der einzelnen Kanäle in jeder aufgetrennten Ebene.

Außerdem ist insbesondere der wahlweise Einsatz unterschiedlicher Temperiermedien (Wasser, Öl, flüssige Gase etc.) möglich. Dabei können die entsprechenden Medienvolumenströme manuell, halbautomatisch oder automatisch geregelt und eingestellt werden. Die entsprechenden Einrichtungen befinden sich zweckmäßigerweise außerhalb des Werkzeugs bzw. der Form. Auch ist durch die erfindungsgemäß möglichen kurzen Kanallängen ein gesteuerter Wechsel der Mediumzufuhr an Einlaß- und Auslaßöffnungen möglich.

Die erfindungsgemäß hergestellten Werkzeuge bzw. Formelemente weisen mehrere übereinanderliegende Kanalebenen auf. Dabei können die Kanäle in den unterschiedlichen Ebenen innerhalb des Werkzeuges bzw. der Form untereinander in Verbindung bestehen.

Durch die Möglichkeit der Herstellung einer beliebigen Kanalform, lassen sich Geometrien verwirklichen, die dem Medium z.B. einen Drall beim Durchströmen des Kanals ermöglichen. Dies führt zu Turbulenzen im Temperiermedium und damit zu einem beschleunigten optimalen Wärmeaustausch. Diese Turbulenzen können durch das Einbringen von Turbulatoren, wie beispielsweise Spiralen, Umlenkblechen od. dgl., in den Kanal noch verstärkt werden. Die Verwendung solcher Turbulatoren ist zwar für sich aus dem Stand der Technik bekannt, aber bislang ließen sich solche Turbulatoren nur durch die Teilbarkeit der Werkzeuge bzw. Formen einsetzen (vgl. US-PS 31 81 200).

Durch die Beherrschbarkeit der Kanalausbildung und Kanalform lassen sich bei jedem Werkzeug- oder Formeinzelteil mehrere Kühl- bzw. Wärmekreise ausgestalten, die über wenigstens einen handelsüblichen Temperiermediumverteiler individuell auf das Auswurfergebnis hin mit den geforderten Volumenströmen beaufschlagt werden können. Dies führt zu "getrimmten" Wärmeflüssen, die manuell, halbautomatisch oder automatisch gesteuert werden können und kann beispielsweise mittels visueller Ergebnisbetrachtung des Endproduktes beim Einfahren vor Produktionsaufnahme erfolgen.

Mittels der bevorzugt eingesetzten Vakuum-Hochtemperatur-Löttechnik ist zuverlässig gewährleistet, daß die Formen oder Werkzeuge absolut leckagefrei sind. Auf diese Weise werden innenliegende Spalten der Einzelteile beim Lötprozeß automatisch geschlossen, so daß Spaltkorrosion zuverlässig aufgeschlossen werden kann.

Durch die Erfindung lassen sich konstruktiv bessere Lösungsmöglichkeiten bei Werkzeugen und Formen realisieren. So können beispielsweise Instabilitäten an Formkernen dadurch vermieden werden, daß der eingelötete Kühleinsatz die Spritzdruckkräfte aufnimmt, wodurch die Maßhaltigkeit der Formteile gewährleistet wird.

Ausgestaltungen im Rahmen der Erfindung ergeben sich aus den Unteransprüchen.

Im folgendem wird die Erfindung anhand einer lediglich ein Ausführungsbeispiel darstellenden Zeichnung näher erläutert.

In der Zeichnung zeigen
- Figur 1: einen Vertikalschnitt durch ein erfindungsgemäßes Werkzeug,
- Figur 2: das erfindungsgemäße Werkzeug im Horizontalschnitt entlang der Linie II-III in Figur 1,
- Figur 3: das erfindungsgemäße Werkzeug im Horizontalschnitt entlang der Linie III-III in Figur 1,
- Figur 4: einen Vertikalschnitt durch ein bekanntes Werkzeug,
- Figur 5: das bekannte Werkzeug im Horizontalschnitt entlang der Linie V-V in Figur 4 und
- Figur 6: das bekannte Werkzeug im Horizontalschnitt entlang der Linie VI-VI in Figur 4.

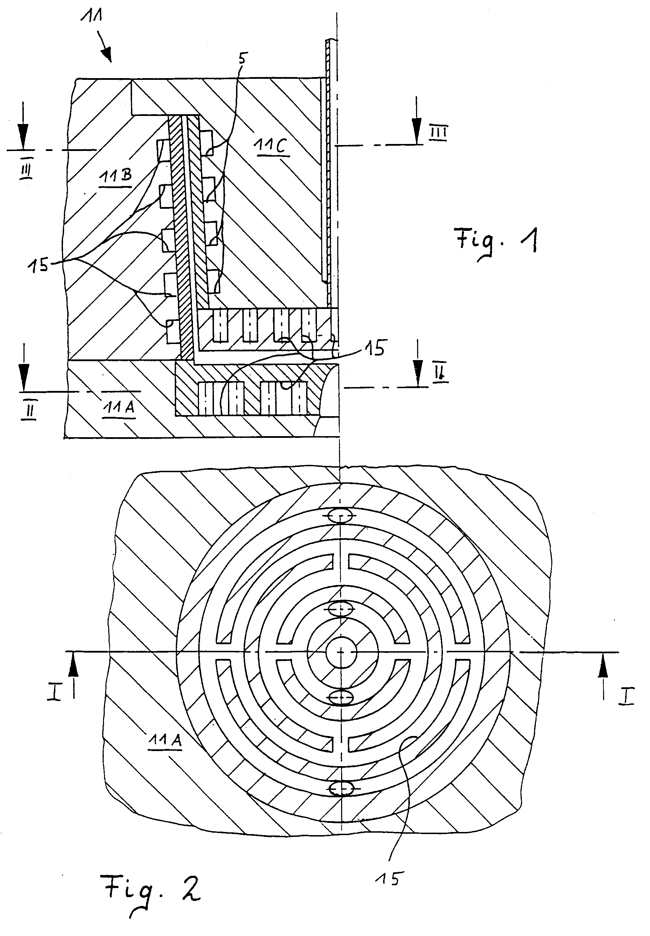

Figur 1 zeigt einen Vertikalschnitt durch ein erfindungsgemäßes Werkzeug 11, welches im Prinzip genauso aufgebaut ist wie das bereits vorgestellte bekannte Werkzeug 1 und eine Bodenform 11A, eine Ringform 11B und eine Kernform 11C aufweist. Auch bei dem erfindungsgemäßen Werkzeug sind nicht näher bezeichnete Einlaßöffnungen und Auslaßöffnungen in jedem einzelnen Formteil vorhanden. Erfindungsgemäß sind nunmehr jedoch die Einlaß- und Auslaßöffnungen durch Kanäle 15 hergestellt, deren Verlauf der äußeren Form des Formnestes 12 angepaßt ist.

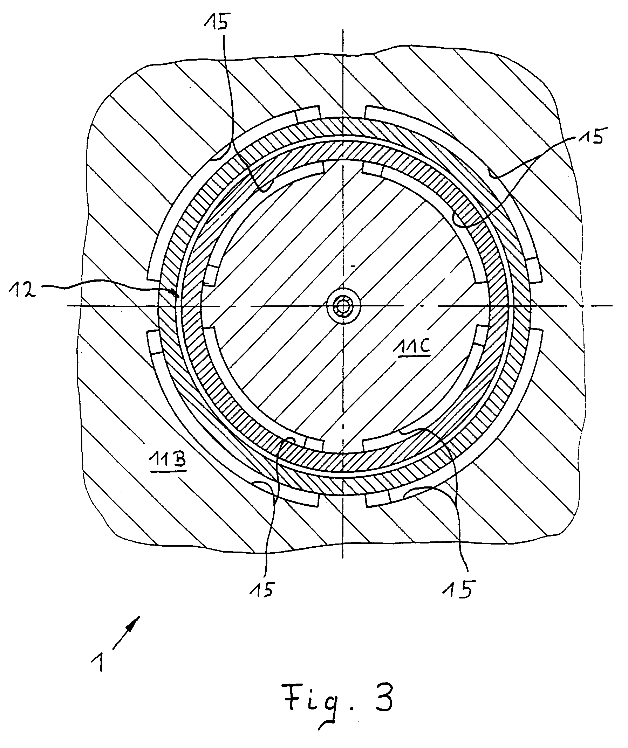

Die Figuren 2 und 3 zeigen Horizontalschnitte entlang der Linien II-II und III-III. Es wird schnell ersichtlich, daß bei dem erfindungsgemäßen Werkzeug eine optimale Anpassung des Verlaufs der Kanäle 15 an die Geometrie des Formnestes 12 möglich ist. Ferner lassen die Figuren 2 und 3 erkennen, daß eine ausreichende Stabilität der dem Formnest 12 unmittelbar zugewandten Flächen der Werrkzeugformen 11A, 11B und 11C besteht.

Es wird nochmals darauf hingewiesen, daß die Zeichnung nur ein bevorzugtes Ausführungsbeispiel darstellt. Zur deutlichen Darstellung weisen die dargestellten Werkzeuge Formnester von Kunststofformteilen mit einfacher geometrischer Struktur auf. Es ist jedoch klar, daß das Bearbeiten der Kanäle entsprechend dem geplanten Volumenstrom des Temperiermediums auch durch Realisation des gewünschten Kanalgeometrie entsprechend dem Temperaturprofil im Kunststofformteil erfolgen kann, falls das Kunststofformteil eine kompliziertere geometrische Form und Materialverteilung aufweist. Einem vorhandenen Temperaturprofil kann also erfindungsgemäß ein optimales Kühlprofil entgegengesetzt werden, so daß eine spiegelbildliche Wärmezu- bzw. abfuhr für ein gewünschtes homogenes Temperaturprofil in einem Werkzeug bzw. einer Form erreicht wird.

Erfindungsgemäß wird also eine erhebliche Verkürzung der Schußzeiten (Zykluszeiten) bei gleichzeitiger Qualitätssteigerung der gespritzten Formteile erreicht und darüber hinaus die Wartungsfreudlichkeit solcher Werkzeuge bzw. Formen deutlich verbessert.

## Patentansprüche

1. Verfahren zur Herstellung eines mit wenigstens je einer Einlaß- und Auslaßöffnung und inneren Kanälen versehenen Werkzeuges bzw. einer entsprechenden Form, **gekennzeichnet durch** die folgenden Schritte:
- Auftrennen des Werkzeugs bzw. der Form in den Ebenen der herzustellenden Kanäle,
- Herstellen der Kanäle entsprechend dem gewünschten Verlauf in Abhängigkeit des geplanten Volumenstroms des Temperiermediums und Temperaturprofils im Kunststofformteil in den Trennflächen des aufgetrennten Werkzeugs bzw. der aufgetrennten Form durch Fräsen, Erodieren od. dgl. und
- Verbinden der aufgetrennten Teile des Werkzeugs bzw. der Form durch Hart- oder Hochtemperaturlöten.

2. Verfahren nach Anspruch 1,
**gekennzeichnet durch** das Bearbeiten der Kanäle durch Realisation des gewünschten Kanalquerschnitts.

3. Verfahren nach Anspruch 1 oder 2,
**gekennzeichnet durch** das Bearbeiten der Kanäle durch Realisation der gewünschten Kanalgeometrie.

4. Verfahren nach einem der Anspüuche 1 bis 3,
**dadurch gekennzeichnet,** daß das Hart- oder Hochtemperaturlöten in einem Vakuumofen erfolgt.

5. Temperierbares Werkzeug bzw. temperierbare Form zur Herstellung von Kunststofformteilen, hergestellt nach einem der Ansprüche 1 bis 4, mit wenigstens einem Formnest (12) zur Aufnahme der Form des herzustellenden Kunststofformteils, wenigstens je einer Einlaß- bzw. Auslaßöffnung (13, 14), wobei die Einlaß- und Auslaßöffnung bzw. -öffnungen (13, 14) über Kanäle (15) miteinander in Verbindung stehen und ein Temperiermedium-Kanalsysstem zum Kühlen bzw. Beheizen des Formnestes (12) bilden,
**dadurch gekennzeichnet,** daß die Kanäle in mehreren Ebenen verlaufen, daß der Verlauf der Kanäle (15) der äußeren Form des Formnestes (12) angepaßt ist und daß die Geometrie der Kanäle (15) auf das Temperaturprofil im Kunststofformteil abgestimmt ist.

6. Werkzeug bzw. Form nach Anspruch 5,
**dadurch gekennzeichnet,** daß in den Kanälen Turbulatoren zur mechanischen Verwirbelung des Temperiermediums vorhanden sind.

7. Werkzeug bzw. Form nach Anspruch 6,
**dadurch gekennzeichnet,** daß die Turbulatoren durch geeignete Konturen der Kanäle bzw. Kanaloberflächen gebildet sind.

8. Werkzeug bzw. Form nach Anspruch 6 oder 7,
**dadurch gekennzeichnet,** daß als Turbulatoren mechanische Verwirbelungselemente in die Kanäle eingebracht werden.

## Claims

1. A process for the production of a tool or a corresponding mould comprising at least one inlet and outlet opening and internal channels, **characterized by** the following steps:
- cutting up the tool or mould in the planes of the channels to be produced,
- producing channels according to match a required course, depending on the planned volumetric flow of the temperature control medium and the temperature profile in the plastics mould part in the parting planes of the separated tool or the separated mould, by milling, eroding or the like, and
- connecting the separated parts of the tool or mould by brazing or high-temperature brazing.

2. A process according to claim 1,
**characterized by** machining the channels by realising the required channel cross-section.

3. A process according to claims 1 or 2,
**characterized by** machining the channels by realising the required channel geometry.

4. A process according to one of claims 1 to 3,
**characterized in that** the brazing or high-temperature brazing takes place in a vacuum furnace.

5. A temperature controlled tool or a temperature controlled mould for the production of plastics mouldings, according to one of claims 1 to 4, with at least one mould cavity (12) having an external shape for producing a plastics mould part, at least one inlet and outlet opening (13, 14) respectively , the inlet and outlet opening or openings (13, 14) being interconnected via channels (15) and forming a temperature control channel system for the cooling or heating of the mould cavity (12),
**characterized in that** the channels extend in a number of planes, that the course of the channels (15) is adapted to the external shape of the mould cavity (12), and that the geometry of the channels (15) is harmonized with the temperature profile in the plastics mould part.

6. A tool or mould according to claim 5,
**characterized in that** the channels contain turbulence generators for the mechanical swirling of the temperature control medium.

7. A tool or mould according to claim 6,
**characterized in that** the turbulence generators are embodied by suitable contours of the channels or channel surfaces.

8. A tool or mould according to claim 6 or 7, **characterized in that** mechanical swirling elements which act as turbulence generators have been inserted into the channels.

## Revendications

1. Procédé de fabrication permettant de réaliser un outil, ou une forme de moulage correspondante, qui est pourvu d'au moins un orifice d'entrée et au moins un orifice de sortie et de conduits intérieurs, caractérisé par les opérations suivantes :
- division de l'outil ou de la forme de moulage suivant les plans des conduits à réaliser,
- réalisation des conduits, d'une manière correspondant au tracé voulu en fonction du débit volumique prévu pour l'agent permettant de tempérer les variations de température, et du profil de température dans la pièce moulée en matière plastique, dans les surfaces de division de l'outil divisé ou de la forme de moulage divisée, par fraisage, érosion ou analogue, et
- assemblage des parties divisées de l'outil ou de la forme de moulage par brasage fort ou brasage à haute température.

2. Procédé selon la revendication 1, caractérisé par l'usinage des conduits en réalisant la section transversale de conduit voulue.

3. Procédé selon la revendication 1 ou 2, caractérisé par l'usinage des conduits en réalisant la forme géométrique de conduit voulue.

4. Procédé selon l'une des revendications 1 à 3, caractérisé en ce que le brasage fort ou le brasage à haute température est effectué dans un four à vide.

5. Outil dont les variations de température peuvent être tempérées, ou forme de moulage dont les variations de température peuvent être tempérées, servant à la fabrication de pièces moulées en matière plastique et réalisé selon l'une des revendications 1 à 4, comprenant au moins une cavité de moulage (12) épousant la forme de la pièce moulée en matière plastique à fabriquer, au moins un orifice d'entrée (13) et au moins un orifice de sortie (14), le ou les orifices d'entrée (13) et le ou les orifices de sortie (14) communiquant entre eux par l'intermédiaire de conduits (15) et constituant un système de conduits d'agent tempérant les variations de température qui sert à refroidir ou chauffer la cavité de moulage (12), caractérisé en ce que les conduits s'étendent dans plusieurs plans, en ce que le tracé des conduits (15) est adapté à la forme extérieure de la cavité de moulage (12) et en ce que la forme géométrique des conduits (15) est adaptée au profil de température dans la pièce moulée en matière plastique.

6. Moule ou forme de moulage selon la revendication 5, caractérisé en ce qu'il est prévu, dans les conduits, des éléments de turbulence servant à provoquer une turbulence mécanique de l'agent tempérant les variations de température.

7. Moule ou forme de moulage selon la revendication 6, caractérisé en ce que les éléments de turbulence sont formés au moyen de contours appropriés des conduits ou des surfaces de conduit.

8. Moule ou forme de moulage selon la revendication 6 ou 7, caractérisé en ce que des éléments mécaniques de turbulence sont disposés dans les conduits en tant qu'éléments de turbulence.
